# EUROPEAN PATENT APPLICATION

(11) **EP 2 458 516 A1**
(43) Date of publication of application: **30.05.2012**
(21) Application number: 12156875.2
(22) Date of filing: 27.02.2009
(51) Int. Cl.: G06F 17/30

(54) **Method, system and apparatus for providing pinned bookmarks**

(62) Divisional of application: 09154008.8
(71) Applicant: Research In Motion Limited, Waterloo, ON N2L 3W8 (CA)
(72) Inventor: Vuong, Thanh, Vinh, Waterloo Ontario N2L 3L3 (CA); Lee, John, Jong-Suk, Waterloo Ontario N2L 3L3 (CA)
(74) Representative: MERH-IP Matias Erny Reichl Hoffmann

(57) **Abstract**

A method, apparatus and system for producing pinned bookmarks is provided. Hardware components of a computing device are enabled to process a browser application for retrieving browser data from a remote computing device and control a display device to display at least a first representation of the browser data. Positional data indicative of a selection of a portion of the first representation of the browser data displayed at the display device is received. The positional data is stored in the memory device in association with at least one identifier of the browser data and at least a subset of the portion. Independent of the status of the browser application, the data stored in the memory device can be retrieved and the display device can be controlled to provide a pinned bookmark representation of the at least one identifier and at least a segment of the at least the subset, such that the at least a subset can be identified and selected, and that upon selection of the at least a subset, the browser data can be requested and received via the at least one identifier, and the display device can be controlled, using the positional data, to provide a second representation of the browser data, the second representation including the portion.

## Description

### FIELD

The specification relates generally to computer implemented methods and systems for managing memory and processing resources, and specifically to a method, system and apparatus for controlling hardware components of a computing device to produce and provide pinned bookmarks.

### BACKGROUND

When a web page is bookmarked and later selected at a computing device (e.g. from a browser application), the entire page is generally loaded even though only a certain area of interest on the page may be of interest. This can make it difficult to go to a certain area in a page, especially if the page is very long and/or verbose (e.g., wikipedia articles, discussion comments appended to end of page). Hence, bookmarking can currently lead to excess bandwidth usage and/or inefficient use of computing resources at the computing device. For example, if only a small part of a previously loaded page is of interest, requesting the entire page over a communications network can be a generally inefficient use of bandwidth. Furthermore, when the page is loaded, the computing device must further process the page in order to find the area of interest, for example by further processing input data received via an input device. This can also increase wear and tear on the input device In addition, in some situations, payment may be required for data consumption on mobile computing devices (i.e., as part of a wireless data plan). Excess downloading of un-intended or unnecessary data may increase data consumption costs.

### SUMMARY

A first aspect of the present specification provides a method for controlling hardware components of a computing device enabled to process a browser application for retrieving browser data from a remote computing device and control a display device to display at least a first representation of the browser data. The method comprises receiving positional data indicative of a selection of a portion of the first representation of the browser data displayed at the display device. The method further comprises storing the positional data in the memory device in association with at least one identifier of the browser data and at least a subset of the portion.

The method can further comprise controlling the display device to provide a pinned bookmark representation of the at least one identifier and at least a segment of the at least the subset, such that the at least a subset can be identified and selected, and that upon selection of the at least a subset, the browser data can be requested and received via the at least one identifier, and the display device can be controlled, using the positional data, to provide a second representation of the browser data, the second representation including the portion. The method can further comprise: receiving input data when the pinned bookmark representation is provided at the display device, the input data indicative that the at least of subset has been selected; requesting and receiving the browser data via the at least one identifier; and controlling the display device, using the positional data, to provide a second representation of the browser data, the second representation including the portion. The method can further comprise: receiving input data when the pinned bookmark representation is provided at the display device, the input data indicative that at least the segment is being scrolled over; and, in response, controlling the display device to provide at least the subset of the portion.

The browser data can comprise a web page. The positional data can comprise at least one of: coordinates for a beginning and end of the portion; an indication of a graphical portion of the browser data; and an indication of a textual portion of the browser data. The at least one identifier of the browser data can comprise at least one of a network address of the browser data, and a title of the browser data, a Uniform Resource Locator (URL), and data identifying the browser application. The at least a subset can comprise a beginning section of the portion.

A second aspect of the specification provides a method of controlling hardware components of a computing device enabled to control a display device, the computing device including a memory device storing positional data, indicative of a selection of a portion of browser data that had been previously displayed at the display device, the positional data stored in association with at least one identifier of the browser data and at least a subset of the portion. The method comprises retrieving, from the memory device, the positional data, the at least one identifier and the at least a subset. The method further comprises controlling the display device to provide a pinned bookmark representation of the at least one identifier and at least a segment of the at least the subset, such that the at least a subset can be identified and selected, and that upon selection of the at least a subset, the browser data can be requested and received via the at least one identifier, and the display device can be controlled, using the positional data, to provide a representation of the browser data, the representation including the portion.

The method can further comprise: receiving input data when the pinned bookmark representation is provided at the display device, the input data indicative that the at least of subset has been selected; requesting and receiving the browser data via the at least one identifier; and controlling the display device, using the positional data, to provide a second representation of the browser data, the second representation including the portion.

The method can further comprise: receiving input data when the pinned bookmark representation is provided at the display device, the input data indicative that at least the segment is being scrolled over; and, in response, controlling the display device to provide at least the subset of the portion.

A third aspect of the specification provides a computing device for producing pinned bookmarks. The computing device comprises a communications interface enabled to request and receive browser data from a remote computing device via a communication network. The computing device further comprises a non-volatile memory device enabled to store pinned bookmarks. The computing device further comprises a processing unit in communication with a display device, and in further communication with the communications interface and the non-volatile memory device. The processing unit is enabled to: process a browser application for retrieving the browser data; control the display device to display a first representation of the browser data; receive positional data indicative of a selection of a portion of the first representation of the browser data displayed at the display device; store the positional data in the non-volatile memory device in association with at least one identifier of the browser data and at least a subset of the portion; and control the display device to provide a pinned bookmark representation of the at least one identifier and the at least a segment of the at least the subset, such that the at least a subset can be identified and selected, and that upon selection of the at least a subset, the browser data can be requested and received via the at least one identifier, and the display device can be controlled, using the positional data, to provide a second representation of the browser data, the second representation including the portion.

The processing unit can be in further communication with an input device, and further enabled to: receive input data, from the input device, when the pinned bookmark representation is provided at the display device, the input data indicative that the at least of subset has been selected; request and receive the browser data via the at least one identifier; and control the display device, using the positional data, to provide a second representation of the browser data displayed, the second representation including the portion.

The processing unit can be in further communication with an input device, and further enabled to: receive input data when the pinned bookmark representation is provided at the display device, the input data indicative that at least the segment is being scrolled over; and, in response, control the display device to provide at least the subset of the portion.

The browser data can comprise a web page. The positional data can comprise at least one of: coordinates for a beginning and end of the portion; an indication of a graphical portion of the browser data; and an indication of a textual portion of the browser data. The at least one identifier of the browser data can comprise at least one of a network address of the browser data, and a title of the browser data, a Uniform Resource Locator (URL), and data identifying the browser application. The at least a subset can comprise a beginning section of the portion.

The computing device can further comprise a volatile memory device for storing representation data for controlling the display device.

### BRIEF DESCRIPTIONS OF THE DRAWINGS

Embodiments are described with reference to the following figures, in which:

Fig. 1 depicts a system for producing pinned bookmarks, according to non-limiting embodiments;

Fig. 2 depicts a representation of data provided in a browser application, according to non-limiting embodiments;

Fig. 3 depicts a method for producing pinned bookmarks, according to non-limiting embodiments;

Fig. 4 depicts the system of Fig. 1, in operation, according to non-limiting embodiments;

Fig. 5 depicts the representation Fig. 2 including a menu for initiating creation of a pinned bookmark, according to non-limiting embodiments;

Fig. 6 depicts a pinned bookmark representation, according to non-limiting embodiments;

Fig. 7 depicts the pinned bookmark representation of Fig 6, including an expanded pinned bookmark according to non-limiting embodiments;

Fig. 8 depicts a pinned bookmark representation, according to non-limiting embodiments;

Fig. 9 depicts a method for providing pinned bookmarks, according to non-limiting embodiments;

Figs. 10 depicts a pinned bookmark representation, according to non-limiting embodiments; and

Fig. 11 depicts the pinned bookmark representation of Fig 10 when an identifier has been selected such that pinned bookmarks associated with the identifier are provided, according to non-limiting embodiments.

### DESCRIPTION OF PREFERRED EMBODIMENTS

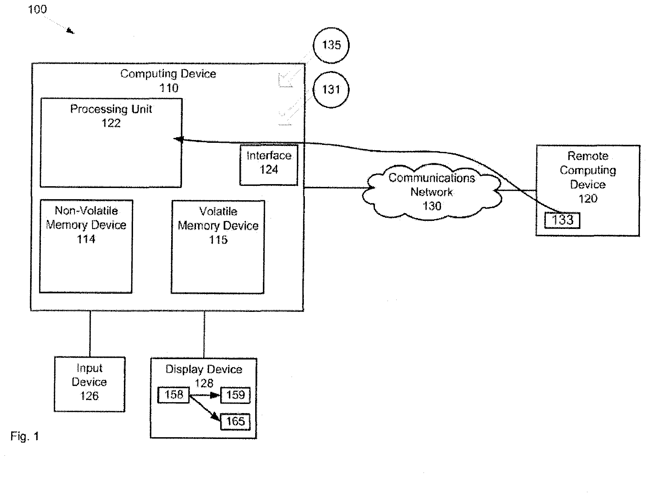

Figure 1 depicts system 100, including a computing device 110 for producing pinned bookmarks, computing device 110 enabled to control a display device 128, according to non-limiting embodiments. Computing device 110 comprises a processing unit 122, a communications interface 124, a non-volatile memory device 114, and a volatile memory device 115, all in communication, for example, via a computing bus (not shown). Computing device 110 is in further communication with an input device 126 and display device 128. In other embodiments, computing device 110 can comprise input device 126 and display device 128.

Computing device 110 is generally enabled to communicate with at least one remote computing device 120 via a communication network 130, the remote computing device 120 storing browser data 133 that can be retrieved by computing device 110. Computing device 110 further comprises a browser application 131 that can be stored in non-volatile memory 114. Browser application 131, upon being processed by processing unit 122, enables computing device 110 to request retrieve browser data 133. In general, browser application 131 can comprise an internet browser, and browser data 133 can comprise at least one web page. However, any suitable browser application and browser data are within the scope of present embodiments.

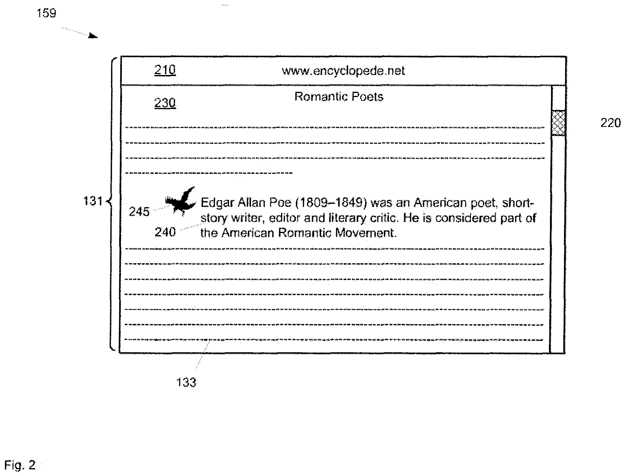

Furthermore, processing unit 122 is enabled to control display device 128 to produce a representation 159 of browser application 131 and browser data 133, displayed therein. For example, as depicted in Figure 2, representation 159 comprises elements of browser application 131 including a header 210, a scroll bar 220 and an area 230 for displaying browser data 133. While only a section of browser data 133 is depicted (and further more, some text depicted as dashed lines), it is understood that any suitable amount of browser data 133 can be displayed within browser application 131, in representation 159, and that furthermore scroll bar 220 can be used to scroll through browser data 133. For example, it is understood that, in some embodiments, only a subset of browser data 133 may be shown in area 230 and that to view other areas of browser data 133, input data indicative that the scroll bar is being activated can be received causing other subsets of browser data 133 to be shown in area 230.

In particular, it is understood that at least a portion 240 of representation 159 is selectable, for example via input data received from input device 126.

Furthermore, browser data 133 can comprise any desired combination of graphical, textual and other elements such as multimedia display areas. Portion 240 generally comprises textual elements, while picture 245, for example, comprises a graphical element.

Browser application 131 can include any suitable elements for accessing and retrieving browser data 131, including but not limited to accessing and retrieving browser data from any suitable number of remote computing devices, similar to remote computing device 120. For example, each remote computing device can comprise a web server storing web pages, which can be retrieved while "surfing the web", as known to persons of skill in the art.

Browser application 131 is further enabled to create pinned bookmarks, as will be described below.

Returning now to Figure 1, computing device 110 further comprises an application 135 for controlling display device 128 to display a pinned bookmark representation 165, as will be described below.

Computing device 110 comprises any suitable computing device for processing applications 131, 135, including but not limited to any suitable combination of personal computers, laptops, mobile electronic devices, PDA's, cell phones and the like. Other suitable types of computing devices are within the scope of present embodiments.

Communications interface 124 is enabled to communicate with remote communication device 120 via communications network 130. Accordingly, communications interface 124 is enabled to communicate via communications network 130 according to any suitable protocol which is compatible with communications network 130. Further, communications interface 124 is enabled to communicate in a wireless or wired manner, as desired, compatible with communications network 130, including but not limited to packet based protocols, Internet protocols, analog protocols, PSTN protocols, cell phone protocols (1X, UTMS, CDMA, GMS, and the like), WiFi protocols, WiMax protocols and/or a combination. Other suitable protocols are within the scope of present embodiments.

Similarly, communication networks 130, can comprise any suitable combination of wired and/or wireless networks, including but not limited to packet based networks, the Internet, analog networks, the PSTN, LAN, WAN, cell phone networks, WiFi networks, WiMax networks and/or a combination. Other suitable types of communication networks are within the scope of present embodiments.

Non-volatile memory device 114 can comprise any suitable non-volatile memory device, including but not limited to read-only memory (ROM), flash memory, magnetic computer storage devices (e.g. hard disks, floppy disks, and magnetic tape), optical discs, and the like.

Volatile memory 115 can comprise any suitable volatile memory device, including but not limited to random access memory (RAM), and the like. In general. Volatile memory device 115 is enabled to store representation data for controlling display device 128 to display representations 159, 165.

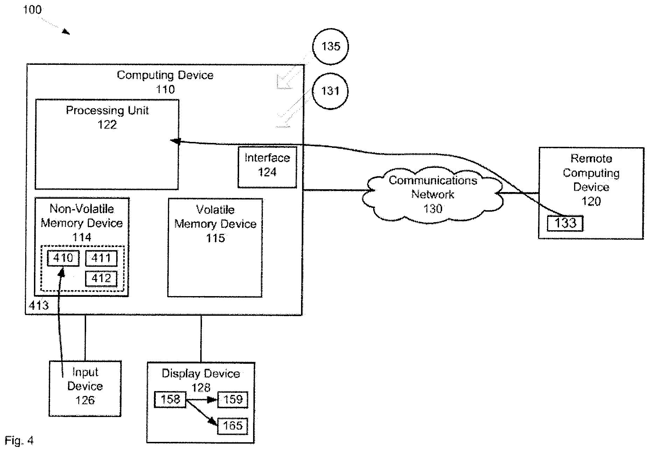

Input device 126 is generally enabled to receive input data, and can comprise any desired combination of suitable input devices, including but not limited to a keyboard, a pointing device, a mouse, a track wheel, a trackball, a touchpad, a touch screen and the like. In alternative embodiments input data can be received at computing device 110 via communications interface 124 and/or communications network 130, for example from other computing devices such as remote computing device 120. In particular, input device 126 is enabled to receive positional data (e.g. positional data 410 as depicted in Figure 4, and described below), positional data comprises data defining an area of browser data 133 within representation 159.

Display module 128 comprises circuitry 158 for generating representations 159, 165. Display module 128 can include any suitable combination of CRT and/or flat panel displays (e.g. LCD, plasma and the like), and circuitry 158 can include any suitable combination of circuitry for controlling the CRT and/or flat panel displays etc., including but not limited to display buffers, transistors, electron beam controllers, LCD cells, plasmas cells, phosphors etc. In particular, display module 128 and circuitry 158 can be controlled by processing unit 122 to generate representations 159, 165.

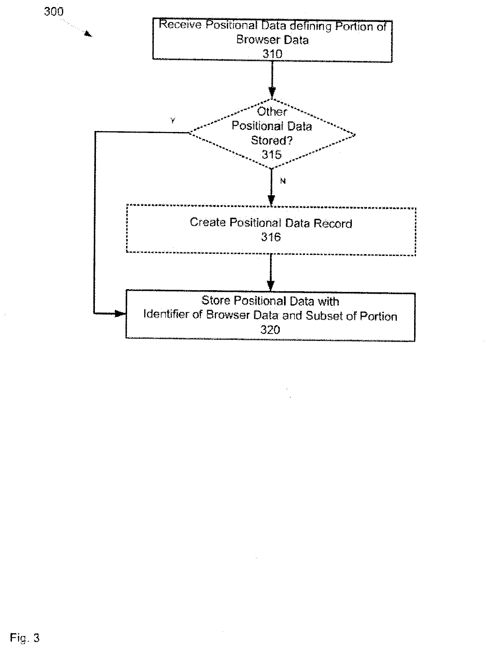

Attention is now directed to Figure 3 which depicts a method 300 for producing pinned bookmarks. In order to assist in the explanation of the method 300, it will be assumed that the method 300 is performed using the system 100. Furthermore, the following discussion of the method 300 will lead to a further understanding of system 100 and its various components. However, it is to be understood that system 100 and/or method 300 can be varied, and need not work exactly as discussed herein in conjunction with each other, and that such variations are within the scope of present embodiments.

In general, method 300 is a computer-implemented method for controlling hardware components of a computing device, such as computing device 110. As described above, computing device 110 is enabled to process browser application 131 for retrieving browser data 133 from remote computing device 120 and control display device 128 to display at least a first representation 159 of browser data 133. It is understood in the description of method 300 that browser application 131 is being processed by processing unit 122, that browser data 133 has been retrieved, and further that display device 128 is being controlled to produce representation 159, as depicted in Figure 2.

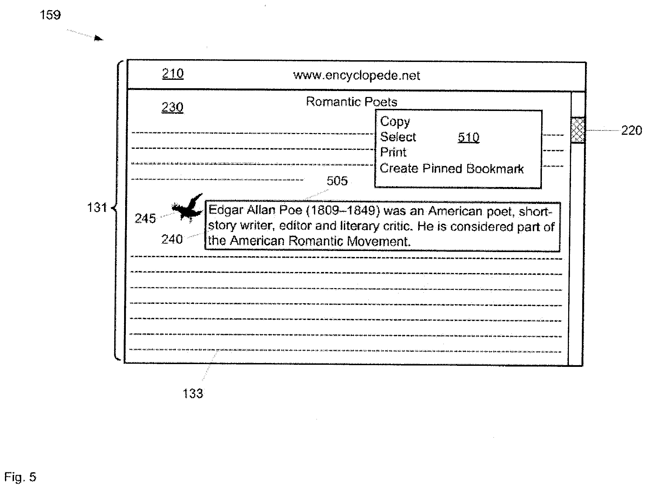

At step 310, positional data 410 (e.g. as depicted in Figure 4) is received, comprising data defining an area of browser data 133 within representation 159, and in particular indicative of a selection of a portion of browser data 133 displayed at display device 128 (e.g., within representation 159). For example, as depicted in Figures 4 and 5 (similar to Figures 1 and 2, respectively, with similar elements having similar numbers), portion 240 can be selected via input device 126, as indicated by box 505 around portion 240. Furthermore, input data indicative that a pinned bookmark is to be created can be received from input device 126. For example, as depicted in Figure 5, if input data indicative that a right click has been detected at input device 126, display device 128 can be controlled to produce a menu 510, which includes a "Create Pinned Bookmark" menu item. Further input data can be received which is indicative that the "Create Pinned Bookmark" menu item has been selected. However, any suitable means of indicating that a pinned bookmark is to be created is within the scope of present embodiments, such as a menu item within a drop down menu can be selected, running a macro or certain key sequences (e.g., pressing "Alt-Ctrl-Q") and / or a touch or gesture-based movement. For example, while browsing through a web page, a word may be tapped on and thus selected, e.g. via a touchscreen and the like, desired sentences are then scrolled across and then untap data can be received indicating that the selected words are to be created as a pinned bookmark.

In any event, referring back to Figure 3, at step 320 (and as depicted in Figure 4), positional data 410 can be stored in non-volatile memory device 114 in association with at least one identifier 411 of browser data 133 and at least a subset 412 of portion 240. Together, positional data 410, identifier 411 and subset 412 comprise pinned bookmark data 413, defining a pinned bookmark.

In some embodiments, positional data 410 comprises coordinates for a beginning and end of portion 240. In general coordinates for a beginning and end of portion 240 enable computing device 110 to identify portion 240 from browser data 240, should browser data 133 be reloaded at a later time. Any suitable coordinates are within the scope of present embodiments, including but not limited to pixels, and any suitable unit of measure (e.g. centimetres, inches, and the like). Positional data 410 may also contain representation of coordinates for the whole browser data 133, or a subset such as a specific page that can be represented as row, column, page, paragraph or line numbers, or word or character counts. Furthermore, positional data 410 may be used to represent images and may store the GPS coordinates (i.e., latitude, longitude) associated with the image.

Furthermore, as it is understood that only a subset of browser data 133 can be shown in area 230, coordinates can be assigned to a substantial subset browser data 133, including but not limited to that subset of browser data 133 displayed in area 230. Hence, when browser data 133 is reloaded, portion 240 can be identified from the whole of browser data 133, and not just the subset displayed in area 230.

In some embodiments, positional data 410 can comprise an indication of a graphical portion of browser data 133 and/or a textual portion of said browser data 133. In other words, in some embodiments, positional data 410 is not limited to defining an area containing text, but can include graphical and other elements, such as picture 245.

At least one identifier 411 can comprise at least one of a network address of browser data 133, and a title of browser data 133, a Uniform Resource Locator (URL), and data identifying browser application 131. In general, identifier 411 comprises data that enables computing device 110 to retrieve browser data 133 from remote computing device 120. In exemplary non-limiting embodiments, identifier 411 comprises www.encyclopede.net from header 210 in Figure 2.

Subset 412 can comprise a beginning section of portion 240. For example if (in exemplary non-limiting embodiments) portion 240 comprises the text "Edgar Allan Poe (1809-1849) was an American poet, short-story writer, editor and literary critic. He is considered part of the American Romantic Movement", then subset 412 can comprise the first few words in portion 240, such as "Edgar Allan Poe (1809-1849) was an American poet". Subset 412 can comprise any suitable number of words, and can be determined using any suitable means (e.g. first given number of words, a given percentage of text in portion 240, etc.).

In any event, once pinned bookmark data 413 is stored, browser application 131 can be closed and/or remain open, as desired.

In some alternative embodiments, prior to storing positional data at step 320, at an optional step 315, it can be determined if other positional data is already stored in non-volatile memory device 114. If not, at optional step 316 a positional data record can be created in non-volatile memory 114 and in some embodiments at step 320, positional data 410, identifier 411 and subset 412 can be stored in the positional data record. In some embodiments, positional data record can comprise pinned bookmark data 413.

If however, it is determined at step 315 that other positional data is already stored in non-volatile memory device 114, then in some embodiments, at step 320, positional data 410, identifier 411 and subset 412 can be stored in the positional data record such that all pinned bookmark data 413 are stored in association and/or in a group in non-volatile memory device 114 for more efficient retrieval of the pinned bookmarks from non-volatile memory 114. In general, however, the format and/or location of positional data 410, identifier 411 and subset 412 when stored in non-volatile memory device 114 are generally non-limiting.

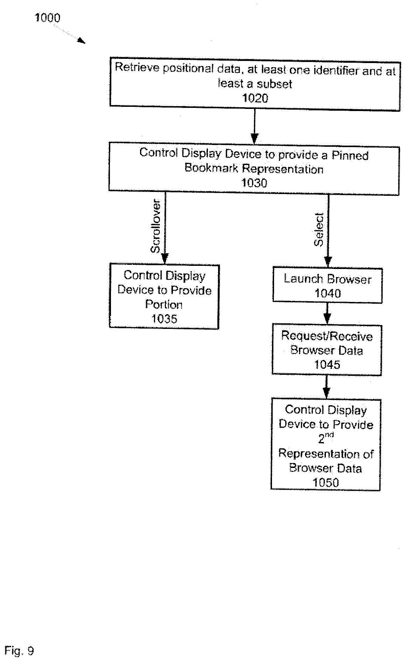

Attention is now directed to Figure 9 which depicts a method 1000 for providing pinned bookmarks. In order to assist in the explanation of the method 1000, it will be assumed that the method 1000 is performed using the system 100. Furthermore, the following discussion of the method 1000 will lead to a further understanding of system 100 and its various components. However, it is to be understood that system 100 and/or method 1000 can be varied, and need not work exactly as discussed herein in conjunction with each other, and that such variations are within the scope of present embodiments.

In general, method 1000 is a computer-implemented method for controlling hardware components of a computing device, such as computing device 110. Furthermore it is understood that method 300 has been previously implemented such that non-volatile memory device 114 stores positional data 410, at least one identifier 411 and subset 412, as in Figure 4. Furthermore, it is understood that method 1000 can be implemented whether or not browser application 131 is being processed by processing unit 122.

At step 1020, positional data 410, at least one identifier 411 and subset 412 is retrieved from non-volatile memory device 114. For example, step 1020 can be implemented upon processing of application 135.

At step 1030, display device 128 is controlled to provide a pinned bookmark representation 165 of at least one identifier 411 and at least a segment of said at least subset 412, such that said subset 412 of said portion can be identified and selected. In some embodiments, step 1030 can occur upon, or during, processing of application 135, such that pinned bookmark representation 165 comprises representations of pinned bookmark data 413 stored in non-volatile memory device 114.

It is understood that any suitable method can be used to initiate steps 1020 and/or steps 130. For example, in some embodiments, step 1020 and/or step 1030 can be initiated via selection of a menu item associated with application 135, for example by receiving input data via input device 126 indicative the menu item has been selected and that application 135 is to be responsively processed. In other embodiments, step 1020 and/or step 1030 can be initiated via selection of an icon associated with application 135, the icon provided at display device 128. Other method of initiating steps 1020 and/or step 1030, including but not limited to controlling display device 128 are within the scope of present embodiments.

Furthermore, it is understood that initiating step 1020 and/or step 1030, including but not limited to controlling display device 128, is independent of whether or not browser application 131 is being processed and/or whether browser data 133 is loaded into browser application 131. In other words, pinned bookmark representation 165, and hence pinned bookmarks, can be accessed independent of the state of browser application 131.

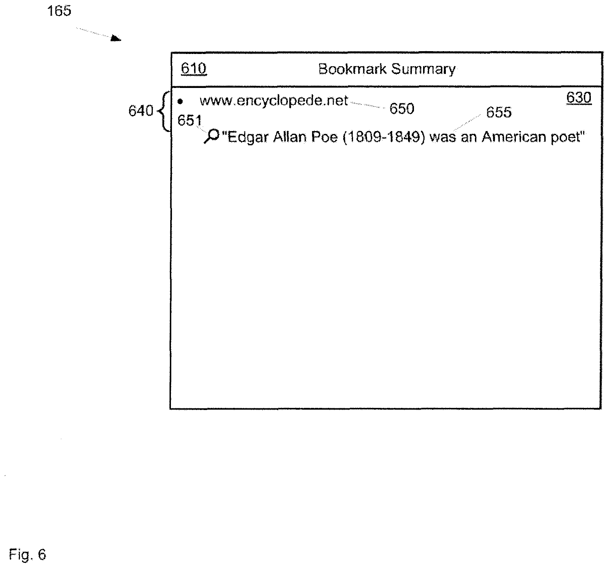

A non-limiting embodiment of pinned bookmark representation 165 is depicted in Figure 6, comprising a header 610 ("Bookmark Summary"), and an area 630 comprising a representation 640 of pinned bookmark data 413. In Figure 6, it is understood that only one pinned bookmark has been created. Representation 165 further comprises a representation 650 of identifier 411, and a representation 655 of subset 412. In some embodiments, representation 165 can further comprise an icon 651 indicative that representation 655 of subset 412 includes a pinned bookmark.

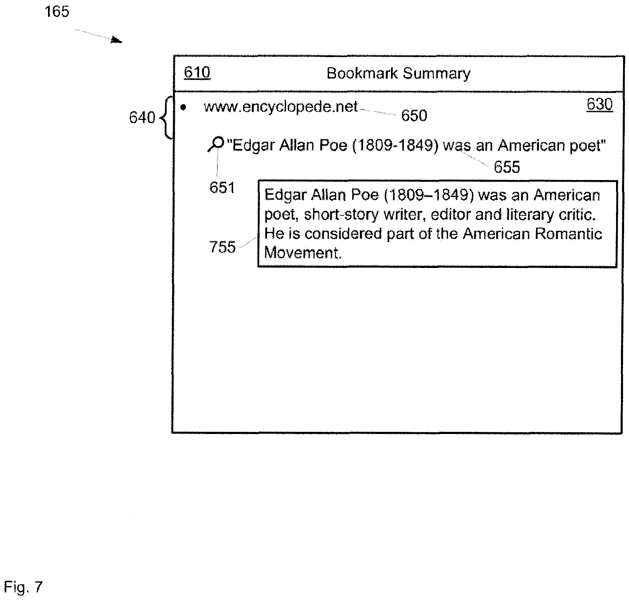

In any event, in some embodiments representation 655 can be scrolled over, using input device 126 (e.g. including but not limited to a pointer pointing to representation 655). In these embodiments, when it is determined that representation 655 is being scrolled over, at step 1035 display device 128 can be controlled to provide a representation 755 of portion 240, such that representation 165 is updated to include the entirety of portion 240, for example as depicted in Figure 7. In other embodiments, representation 655 can be updated to include the entirety of portion 240.

In some embodiments, it can be desirable for portion 240 to be provided in its original context within browser data 133. Hence, representation 655 of subset 412 can be selected, via receipt of data from input device 126 indicative that representation 655 is, for example, being pointed to by a pointing device and/or clicked on via the pointing device. In any event, upon selection of subset 412, browser data 133 can be requested and received via identifier 411, and display device 128 can be controlled to provide a second representation of browser data 133, similar to representation 159, second representation including portion 240.

For example, from step 1030, input data can be received when pinned bookmark representation 165 is provided at display device 126, input data indicative that subset 412 has been selected. If so, at step 1040 browser application 131 is launched, if not already launched. At step 1045, browser data 133 is requested and received from remote computing device 120, via identifier 411. At step 1050, once browser data 133 is received, display device 128 is controlled to provide a second representation of browser data 133, the second representation including portion 240. Portion 240 can be located within browser data 133 using positional data 410. Hence, once a pinned bookmark is selected in representation 165, browser application 131 is launched (if not already), browser data 133 is requested and received, and browser data 133 is provided in a representation similar to representation 159, with portion 240 displayed (i.e. browser application jumps to portion 240).

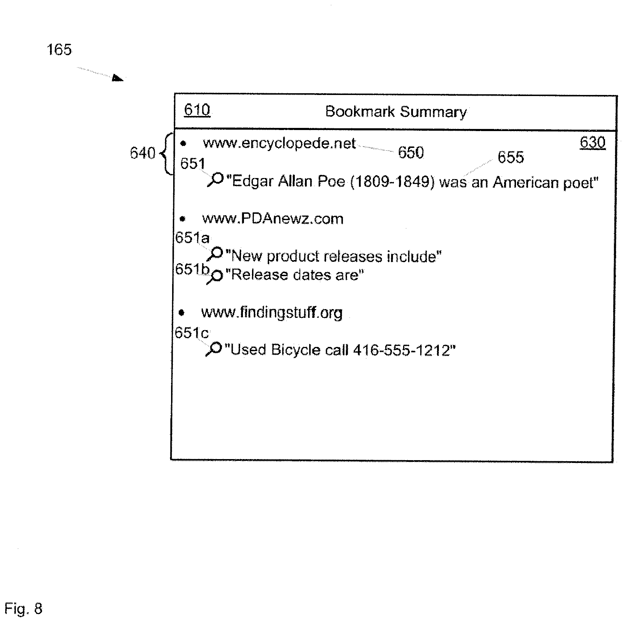

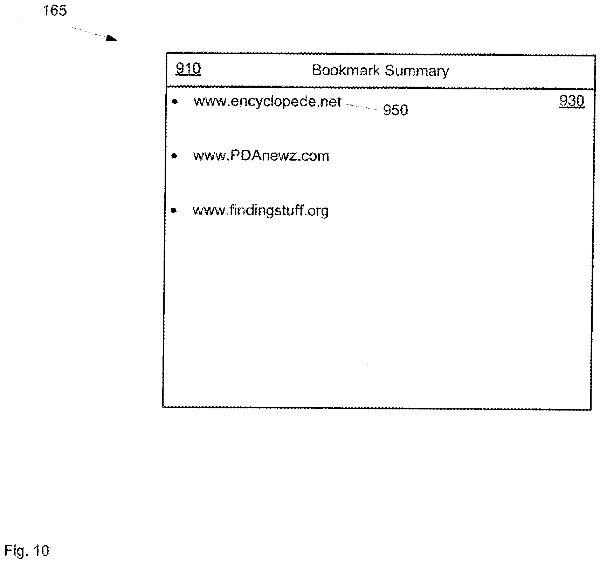

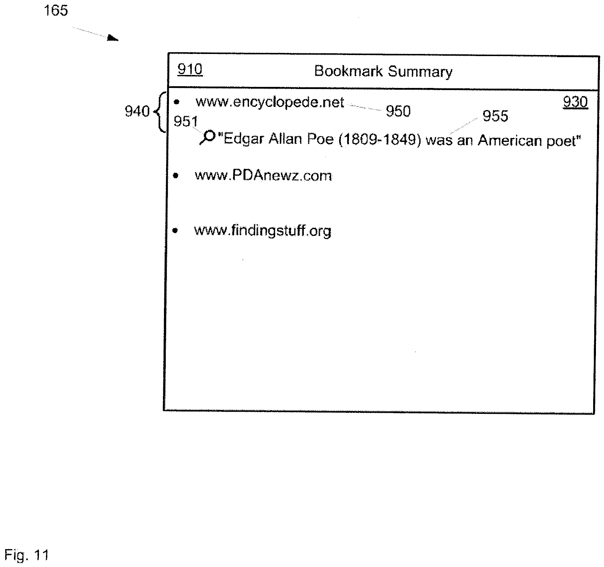

Attention is now directed to Figure 10 which depicts another non-limiting embodiment of representation 165. Elements depicted in Figure 9 are similar to elements depicted in Figure 8, however with numbers preceded by a "9" rather than a "6". For example, representation 950 is similar to representation 650 of identifier 411. In these embodiments, pinned bookmarks are not initially provided in representation 165; rather input data can be received, via input device 126, indicative that representation 950 has been selected and or scrolled over, e.g. via pointing device. Once such input data has been received, representation 955 (and optionally icon 951) can be provided, as depicted in Figure 11. Indeed, once such input data has been received, all pinned bookmarks associated with identifier 411 can be provided.

It is generally understood that any suitable number of pinned bookmarks are within the scope of present embodiments. For example, steps 310 and 320 can be repeated any desired number of times such that when step 1030 is implemented, a pinned bookmark representation 865, similar to representation 165, can include the given number of pinned bookmarks, as depicted in Figure 8. Figure 8 is similar to Figure 6 with like elements having like numbers. Furthermore, representation 165 can be updated to representation 865 as pinned bookmarks are added, in embodiments where application 135 is being processed while browser application 131 is being processed.

In general, implementation of steps 310 to 320 obviates requesting browser data 133 from remote computing device 120 to view an area of interest within browser data 133, as bookmarked areas of interest are stored in pinned bookmark data 413. Hence bandwidth within system 100 is saved and/or used more efficiently. Furthermore, steps 10200-1050 obviate receipt of further input data, and processing thereof, to request browser data 133 and find portion 240 therein (assuming that portion 240 is to be provided in context within browser data 133). Hence, resources at computing device 110 are used efficiently.

Certain further advantages will now be explained. In particular, the teachings herein optimize the control of memory 114, 115, and control of display device 128, so as to provide pinned bookmark data 413 and thereby reduce the cumbersome use of key-boarding, mouse manipulation, trackball manipulation, or trackwheel manipulation or the like. This contrasts with certain prior art applications implementations on computing devices, where data of interest cannot be bookmarked via pinned bookmarks, and in order to view data of interest, browser data must be requested and cumbersome scrolling through the browser data occurs to find the data of interest.

Indeed, scrolling back and forth between areas of a browser data can be resource intensive, (e.g. consuming significant amounts of processor and memory resources) and can lead to the device to freeze, or even crash, as repetitive scrolling back and forth throughout browser data is effected. The teachings herein can obviate or mitigate such intense resource use as the foregoing functional teachings are effected through either hardware or software configuration of the various components of computing device 110.

Those skilled in the art will appreciate that in some embodiments, the functionality of computing device 110 can be implemented using pre-programmed hardware or firmware elements (e.g., application specific integrated circuits (ASICs), electrically erasable programmable read-only memories (EEPROMs), etc.), or other related components. In other embodiments, the functionality of computing device 110 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

Particular aspects of the present document are:
Aspect 1. A method for controlling hardware components of a computing device 110 enabled to process a browser application 131 for retrieving browser data from a remote computing device 120 and control a display device 128 to display at least a first representation 159 of said browser data, said method comprising:
   receiving positional data 410 indicative of a selection of a portion of said first representation of said browser data displayed at said display device 128; and
   storing said positional data 410 in said memory device 114 in association with at least one identifier of said browser data and at least a subset of said portion.
Aspect 2. The method of aspect 1, further comprising:
   controlling said display device 128 to provide a pinned bookmark representation 165 of said at least one identifier and at least a segment of said at least said subset, such that said at least a subset can be identified and selected, and that upon selection of said at least a subset, said browser data can be requested and received via said at least one identifier, and said display device 128 can be controlled, using said positional data 410, to provide a second representation of said browser data,
   said second representation comprising said portion.
Aspect 3. The method of aspect 2, further comprising:
   receiving input data when said pinned bookmark representation 165 is provided at said display device 128, said input data indicative that said at least of subset has been selected;
   requesting and receiving said browser data via said at least one identifier; and controlling said display device 128, using said positional data 410, to provide a second representation of said browser data, said second representation comprising said portion.
Aspect 4. The method of aspect 2, further comprising: receiving input data when said pinned bookmark representation 128 is provided at said display device 128, said input data indicative that at least said segment is being scrolled over; and, in response, controlling said display device 128 to provide at least said subset of said portion.
Aspect 5. The method of any one of the preceding aspects, wherein said browser data comprises a web page.
Aspect 6. The method of any one of the preceding aspects, wherein said positional data comprises at least one of:
   coordinates for a beginning and end of said portion;
   an indication of a graphical portion of said browser data; and
   an indication of a textual portion of said browser data.
Aspect 7. The method of any one of the preceding aspects, wherein said at least one identifier of said browser data comprises at least one of a network address of said browser data, and a title of said browser data, a Uniform Resource Locator 'URL', and data identifying said browser application.
Aspect 8. The method of any one of the preceding aspects, wherein said at least a subset comprises a beginning section of said portion.
Aspect 9. A method of controlling hardware components of a computing device 110 enabled to control a display device 128, said computing device 110 comprising a memory device 114 storing positional data 410, indicative of a selection of a portion of browser data that has been previously displayed at said display device 128, said positional data 410 stored in association with at least one identifier of said browser data and at least a subset of said portion, said method comprising:
   retrieving, from said memory device 114, said positional data 410, said at least one identifier and said at least a subset; and
   controlling said display device 128 to provide a pinned bookmark representation 165 of said at least one identifier and at least a segment of said at least said subset, such that said at least a subset can be identified and selected, and that upon selection of said at least a subset, said browser data can be requested and received via said at least one identifier, and said display device 128 can be controlled, using said positional data 410, to provide a representation of said browser data, said representation comprising said portion.
Aspect 10. The method of aspect 9, further comprising:
   receiving input data when said pinned bookmark representation 165 is provided at said display device 128, said input data indicative that said at least of subset has been selected;
   requesting and receiving said browser data via said at least one identifier; and
   controlling said display device 128, using said positional data 410, to provide a second representation of said browser data, said second representation comprising said portion.
Aspect 11. The method of aspect 9, further comprising: receiving input data when said pinned bookmark representation 128 is provided at said display device 128, said input data indicative that at least said segment is being scrolled over; and, in response, controlling said display device 128 to provide at least said subset of said portion.
Aspect 12. A computing device 110 for producing pinned bookmarks, the computing device 110 comprising:
   a communications interface 124 enabled to request and receive browser data from a remote computing device 120 via a communication network 130;
   a non-volatile memory device 114 enabled to store pinned bookmarks;
   a processing unit 122 in communication with a display device 128, and in further communication with said communications interface 124 and said non-volatile memory device 114, said processing unit 122 enabled to:
      process a browser application 131 for retrieving said browser data;
      control said display device 128 to display a first representation of said browser data; and
      implement the steps of the method of any of aspects 1 to 8 or the steps of the method of any one of aspects 9 to 11.
Aspect 13. The computing device 110 of aspect 12, said processing unit 122 in further communication with an input device 126, and further enabled to:
   receive input data, from said input device 126, when said pinned bookmark representation 165 is provided at said display device 128, said input data indicative that said at least of subset has been selected;
   request and receive said browser data via said at least one identifier; and
   control said display device 128, using said positional data 410, to provide a second representation of said browser data displayed, said second representation comprising said portion.
Aspect 14. The computing device 110 of aspect 12, said processing unit 122 in further communication with an input device 126, and further enabled to: receive input data when said pinned bookmark representation is provided at said display device 128, said input data indicative that at least said segment is being scrolled over; and, in response, control said display device 128 to provide at least said subset of said portion.
Aspect 15. The computing device 110 of any one of aspects 12 to 14, further comprising a volatile memory device 115 for storing representation data for controlling said display device.

## Claims

1. A method for controlling hardware components of a computing device (110) enabled to process a browser application (131) for retrieving browser data from a remote computing device (120) and control a display device (128) to display at least a first representation (159) of said browser data, said method comprising:
receiving and storing positional data (410) indicative of a selection of a portion of said first representation of said browser data, said positional data (410) stored in a memory device (114) in association with at least one identifier of said browser data and at least a subset of said portion; and,
controlling said display device (128) to provide a representation (165) of said at least one identifier and at least a segment of said at least said subset, such that said at least a subset is identified, and upon selection of said at least a subset in said representation (165):
launching said browser application (131) if not already launched;
requesting and receiving said browser data from said remote computing device (120) via said at least one identifier; and
controlling said display device (128) to provide a representation of said browser application (131), wherein said portion is located using said positional data (410) and said browser application jumps to said portion.

2. The method of claim 1, further comprising:
receiving input data when said representation (165) of said at least one identifier and at least a segment of said at least said subset is provided at said display device (128), said input data indicative that said at least of subset has been selected;
requesting and receiving said browser data via said at least one identifier; and
controlling said display device (128), using said positional data (410), to provide a second representation of said browser data, said second representation comprising said portion.

3. The method of claim 1, further comprising: receiving input data when said representation (165) of said at least one identifier and at least a segment of said at least said subset is provided at said display device (128), said input data indicative that at least said segment is being scrolled over; and, in response, controlling said display device (128) to provide at least said subset of said portion.

4. The method of any one of the preceding claims, wherein said browser data comprises a web page.

5. The method of any one of the preceding claims, wherein said positional data comprises at least one of:
coordinates for a beginning and end of said portion;
an indication of a graphical portion of said browser data; and
an indication of a textual portion of said browser data.

6. The method of any one of the preceding claims, wherein said at least one identifier of said browser data comprises at least one of a network address of said browser data, and a title of said browser data, a Uniform Resource Locator 'URL', and data identifying said browser application.

7. The method of any one of the preceding claims, wherein said at least a subset comprises a beginning section of said portion.

8. A computing device (110) comprising:
a communications interface (124) enabled to request and receive browser data from a remote computing device (120) via a communication network (130);
a non-volatile memory device (114);
a processing unit (122) enabled to:
process a browser application (131) for retrieving said browser data;
control said display device (128) to display a first representation of said browser data; and
implement the steps of the method of any of claims 1 to 7.

9. The computing device (110) of claim 8, said processing unit (122) in communication with an input device (126), and further enabled to:
receive input data, from said input device (126), when said representation (165) of said at least one identifier and at least a segment of said at least said subset is provided at said display device (128), said input data indicative that said at least of subset has been selected;
request and receive said browser data via said at least one identifier; and
control said display device (128), using said positional data (410), to provide a second representation of said browser data displayed, said second representation comprising said portion.

10. The computing device (110) of claim 8, said processing unit (122) in further communication with an input device (126), and further enabled to: receive input data when said representation (165) of said at least one identifier and at least a segment of said at least said subset is provided at said display device (128), said input data indicative that at least said segment is being scrolled over; and, in response, control said display device (128) to provide at least said subset of said portion.

11. The computing device (110) of any one of claims 8 to 10, further comprising a volatile memory device (115) for storing representation data for controlling said display device.
